# EUROPEAN PATENT SPECIFICATION

(11) **EP 0 392 185 B1**
(45) Date of publication and mention of the grant of the patent: **13.01.1993**
(21) Application number: 90104186.3
(22) Date of filing: 05.03.1990
(51) Int. Cl.: G01M 1/22

(54) **Automatic orbit analysis using neural network**
Automatische Orbitanalyse mit Anwendung eines Neuronnetzwerkes
Analyse automatique d'orbite utilisant un réseau de neurone

(30) Priority: 13.03.1989 US 322137
(43) Date of publication of application: 17.10.1990
(73) Proprietor: WESTINGHOUSE ELECTRIC CORPORATION, Pittsburgh Pennsylvania 15235 (US)
(72) Inventor: Osborne, Robert Lee, Winter Springs, FL 32708 (US)
(74) Representative: Fleuchaus, Leo, Dipl.-Ing.

(56) References cited:
- EP-A- 0 066 494
- US-A- 4 453 407
- MEASUREMENT CONTROL, vol. 13, no. 3, March 1980, London, GB; I.R. Hitchen: "Vibration monitoring for rotating machinery"
- MACHINE DESIGN, vol. 52, no. 1, January 1980, Ohio, US: C.A. Eubanks: "Diagnosing rotating equipment ills"
- APPLIED OPTICS, vol. 28, no. 2, 15 January 1989, New York, US; J.Y. Jau et al.: "Comparison of artificial neural networks with pattern recognition and image processing"
- NATURE, vol. 337, no. 6203, 12 January 1989, pages 129-132, MacMillan Journals Ltd., Basingstoke, GB; F.R. Crick: "The recent excitement about neural networks"

## Description

The present invention is generally related to a system for detecting defects in equipments having a rotating shaft and, more particularly, to a system using a neural network performing orbit analysis to detect such defects.

There are several known forms of analysis for detecting malfunctions or defects in equipments having rotating shafts, such as in motors, turbines, etc., based upon variation in the movement of the shaft. A review of different types of analysis is given in:"Machine Design" vol. 52, no. 1, January 1980, Ohio, US, C.A. EUBANKS "Diagnosing rotating equipment ills".

One type of analysis uses sensors to detect vibration of the equipment, specifically the shaft, and analyzes the vibration components, which are harmonics of the running speed. If the shaft is rubbing, several harmonics of the running speed will be present. If there is only a high amplitude of the first harmonic, then the shaft needs balancing. More sophisticated frequency analysis can be performed to detect other defectes or malfunctions in the equipment.

Another known analysis technique is orbit analysis. In orbit analysis, movement of the axis of the shaft from a normal position is detected. The pattern of movement, when viewed from the end of the shaft can be analyzed to provide information regarding type of defect. Typically, the pattern is produced by mounting a pair of deflection sensors adjacent to a shaft bearing to detect deflection along X (horizontal) and Y (vertical) axes. Signals produced by the deflection sensors are used as inputs to an oscilloscope to produce an orbit plot.

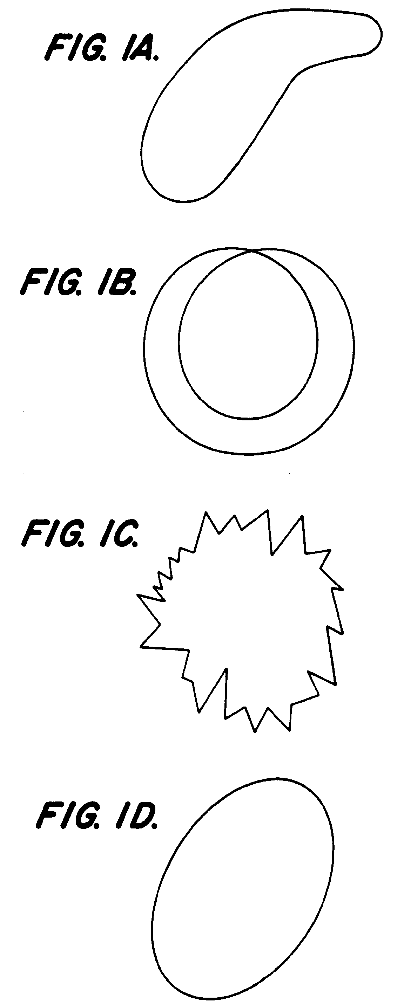

Examples of some typical orbit plots which are produced by defects in equipment are illustrated in Figs. 1A-1D. A typical example of an orbit plot associated with a severe case of misalignment is illustrated in Fig. 1A. An example of an orbit plot produced by oil whirl or oil whip in a sleeve bearing is illustrated in Fig. 1B. The spiked circle illustrated in Fig. 1C is an example of the orbit plot produced by a rub, while the plot illustrated in Fig. 1D is an example of a bent or unbalanced shaft. Depending upon the location of the rub, the form of misalignment or cause of the unbalanced shaft, the orientation and extent of deviation from a circle may change.

As a result, numerical analysis, as opposed to graphical analysis, of the orbits is extremely difficult. While orbit analysis is a powerful tool for diagnosing defects in equipment having a rotating shaft, the technique does not lend itself to automation, but rather requires a human expert to analyze the orbits which are displayed. In comparison, frequency analysis can be more easily automated.

### SUMMARY OF THE INVENTION

An object of the present invention, is to provide an automated system for performing orbit analysis.

Another object of the present invention is to produce a diagnosis of malfunctions in equipment having a rotating shaft using both orbit analysis and frequency analysis.

The invention in its broad form resides in a method and a system for automatically performing orbit analysis in equipment having a rotating shaft to detect a malfunction by way of movement in the shaft-axis, comprising: input means for inputting movement data indicative of movement of the shaft; characterized by a neural network system for processing the movement data using a trained neural network to produce a first malfunction-indication of the equipment.

Described in detail herein is a system for automatically analyzing equipment, having a rotating shaft, for defects, comprising input means for inputting movement data indicative of movement of the shaft and a neural network system for processing the movement data using a trained neural network to produce a first defect indication of the shaft bearing system. The movement data can be produced using deflection sensors capable of sensing deflection of the shaft along each of two axes perpendicular to each other and substantially normal to the surface of the shaft. In heavy equipment where the shaft is mounted on several bearings, at least two of the deflection sensors are preferably associated with each of the bearings. The same deflection sensors can be used to generate frequency data analyzed to obtain a second defect indication. Preferably, an expert system rulebase is used to analyze the first and second defect indications to obtain a diagnosis of the equipment.

### BRIEF DESCRIPTION OF THE DRAWINGS

In order that the present invention can be easily understood and readily practiced, a preferred embodiment will be described, by way of example only, and to be understood in conjunction with the accompanying drawings wherein:
Figs. 1A-1D are X-Y plots of shaft orbits for some examples of malfunctions;
Fig. 2 is a block diagram of a system according to an embodiment of the present invention;
Fig. 3 is a flowchart of a method according to a preferred embodiment of the present invention.

### DESCRIPTION OF THE PREFERRED EMBODIMENTS

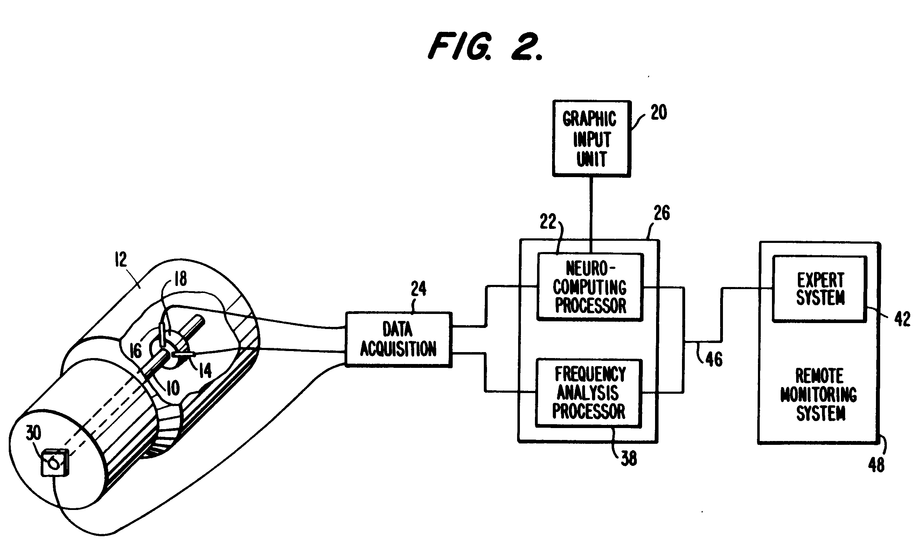

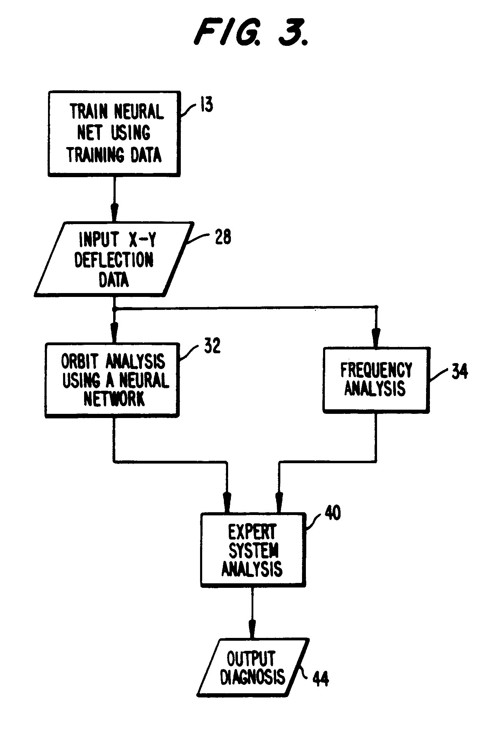

Various forms of graphical analysis using neural networks or neuro-computing have been developed. For example, the oldest neural network known was developed by Frank Rosenblatt at Cornell University in 1957 to recognize typed characters. Hand printed character recognition has been demonstrated by several experimenters, including Kunihiko Fukushima at Laboratories. Several other examples can be given of pattern recognition, both graphical and non-graphical, using neural networks over the last twenty or more years. In the system illustrated in Fig. 2, a neural network is used for the purpose of analyzing the orbit of a rotating shaft 10 in a piece of equipment 12. The equipment may be of any type and is generically illustrated by the cylinder 12 in Fig. 2. The method used to recognize equipment malfunctions using orbit analysis will be described with reference to Fig. 3, and a specific system using this method will be described with reference to Fig. 2.

The first step in using any neural network is to define the object or objects to be recognized. In some of the older neural networks, this was done manually in a form of programming using weights at each of the nodes in the network. Most modern neural networks have a training mode in which the data to be recognized is input and the proper output to be produced is supplied. Conceptually, this is similar to teaching a child to speak or read where an answer is given and corrected.

The key to proper training of the neural network is in the data which is selected for training. Patterns which are easily recognized as an example of an object, or in this case a defect, should be supplied and some guidance should be provided in distinguishing between less extreme examples. For example, the plots illustrated in Figs. 1A-1D might be used as part of the training for a neural network to recognize equipment malfunctions which result in the illustrated orbit plots illustrated in Figs. 1A-1D.

These plots may be generated in one of two ways. Conventional orbit plotting equipment including X-Y probes 14, 16 can be mounted, e.g., near a bearing 18 to supply signals to conventional orbit monitoring equipment (not shown) available from, e.g., Bentley-Nevada of Minden, Nevada, U.S.A. However, obtaining plots of malfunctioning equipment during normal operation of the equipment is difficult due to the desire to repair or replace the malfunctioning equipment as soon as possible. In addition, it is necessary to wait until each of the conditions desired to be detected have occurred. As an alternative, it may be possible to induce the defects in a piece of equipment under test conditions. Initially, however, it is simplest to utilize synthetically generated data.

A graphic input unit 20 may be used for inputting the training data to a neuro-computing processor 22 regardless of whether the source of the data is orbit plots from malfunctioning equipment or synthetic data. Use of the graphic input unit 20 is preferred to obtaining the training data directly from the X-Y probes 14, 16 via a data acquisition system 24, because there is greater control over the data which is supplied.

Regardless of the source of input, the training data is preferably stored in a memory (not shown) of a computing system 26 associated with the neuro-computing processor 22. This enables the neuro-computing processor to be retrained and the same training data to be used to train other neuro-computing processors without reentering the data. In addition, the training data may be updated when new orbit plots are discovered or improvements to the neural network are desired.

Once the neuro-computing processor 22 has been trained, the neural network formed in the neuro-computing processor 22 can be used to perform orbit analysis. X-Y deflection data is input 28 via either the graphic input unit 20 or data acquisition system 24. The graphic input unit 20 may be a mouse, a digitizing tablet, or any other known device foc inputting graphical data. For example, a high resolution touch screen could be mounted over an oscilloscope displaying an orbit and a stylus could be used to trace the outline of the orbit. This may be satisfactory for a relatively stationary and consistent orbit like that illustrated in Fig. 1D, but more erratic orbits, like that illustrated in Fig. 1C would be more difficult to input, even if the oscilloscope stores a plot corresponding to a single rotation of the shaft. A similar technique would be to use a camera to obtain a photograph of the oscilloscope display from conventional orbit analysis equipment and then input the photographed orbit using a digitizing tablet or mouse.

In the preferred embodiment, the neuro-computing processor 22 is connected on-line to the data acquisition system 24 which obtains movement data from the X-Y probes or deflection sensors 14, 16. Although only a single bearing 18 with associated deflection sensors 14, 16 is illustrated in Fig. 2, a typical piece of equipment has several bearings and deflection sensors may be mounted near each of the bearings or at alternative locations along the shaft. The deflection sensors may be of any known type, such as proximity sensors or vibration sensors.

A key phasor sensor 30 is preferably used to allow determination of phase angle during rotation of the shaft 10. This enables the deflection data output by the deflection sensors 14, 16 to be referenced to the rotation of the shaft 10. The key phasor sensor 30 can also be used to provide speed information in addition to timing for the deflection data.

The data obtained by the data acquisition system 24 indicates deflection of the axis of the shaft 10 from a normal position. This movement data is processed by the neuro-computing processor 22 which performs orbit analysis 32 using the neural network created by the training data. The result of the orbit analysis will be termed a defect indication. This indication may, of course, be that no defect has been detected. This would correspond to an orbit plot of a dot or small circle, indicating that the axis of the shaft 10 remains substantially centered.

The defect indication may represent a defect in the shaft, such as being bent or unbalanced, or a malfunction elsewhere in the equipment which, e.g., has caused a rub. As known in the art of orbit analysis, the size of the plot, e.g., along the major and minor axes of an ellipse like that illustrated in Fig. 1D; the orientation of the orbit, e.g., the angle between the major axes of an ellipse and the X axis; and the shape of the orbit are some of the distinguishing features, as illustrated in Figs. 1A-1D.

In addition, the direction of the orbit in comparison to the direction of rotation of the shaft is also a factor which must be considered by the neuro-computing processor 22. Therefore, data supplied to the neuro-computing processor 22 must include not only the pattern produced by the orbit, but also orientation information, scaling information and whether the center of the shaft moves in the same direction as the surface of the shaft, or counter to it. In other words, if the shaft when viewed from one end is rotating clockwise, data must be provided indicating whether the axis of the shaft, when viewed from the same end, appears to move in a clockwise or counterclockwise direction.

While orbit analysis used alone is a powerful tool for diagnosing defects or malfunctions in a piece of equipment, in the preferred embodiment, orbit analysis is used in combination with frequency analysis 34. For this purpose, deflection data 28 is inputted to a frequency analysis processor 38, e.g., via the data acquisition system 24. A separate vibration sensor is not illustrated in Fig. 2. It may be mounted on the exterior of the equipment 12, e.g., where the phase sensor 30 is illustrated, or in the interior of the equipment 12, in any conventional manner.

The frequency analysis processor 38 may perform conventional analysis, including overall vibration (amplitude and phase) and variation in the harmonics of the running speed of the equipment 12. The frequency analysis 34 results in a second indication of defects or malfunctions which can be compared with the indication produced by the orbit analysis. Thus, it can be determined whether the defect indications produced by the orbit analysis and the frequency analysis are cumulative or contradictory. This is preferably accomplished by expert system analysis 40 performed by an expert system 42. An example of an expert system which has been used for diagnosing indications generated by on line sensors is provided in U.S. Patent No. 4,644,479. The output from the expert system analysis 40 is a diagnosis 44 of the operating conditions in the equipment 12.

In the preferred embodiment, the neuro-computing processor 22 and frequency analysis processor 38 are closely associated in computing system 26 and may share some devices, such as memory, input/output ports, operator interface, etc. The computing system 26 is preferably connected on-line to the sensors 14, 16, 30 via the data acquisition system 24 at the same site as the equipment 12 which is being monitored. Relatively close proximity of the computing system 26 and equipment 12 is desirable, since a relatively large amount of high frequency data is required for the analyses 32 and 34. The defect indications generated by the processors 22 and 30 may be transmitted via a communication link 46 to a remote monitoring system 48 which includes the expert system 42.

In a second embodiment of the present invention, the expert system 42 may be included in the computing system 26. If expert system analysis 40 is considered unnecessary, the defect indications produced by orbit analysis 32 may be used with or without additional frequency analysis 34.

In a third embodiment, the neuro-computing processor 22 is not connected on-line to the equipment 12. Instead, deflection data is input via the graphic input unit 20 and another man/machine interface, such as a keyboard (not shown) which is used to provide, e.g., scaling information. The orbit plot input via the graphic input unit 20 may be generated as a sketch from an oscilloscope screen or by digitizing a photograph, as discussed above with reference to the input of training data. It should be noted that some neuro-computing processors are capable of generating a compiled program which can be executed in a conventional computer which could then be used to perform the orbit analysis 32.

The many features and advantages of the present invention are apparent from the detailed specification and thus, it is intended by the appended claims to cover all such features and advantages of the method which fall within the true spirit and scope of the invention. Further, since numerous modifications and changes will readily occur to those skilled in the art, it is not desired to limit the invention to the exact construction and operation illustrated and described. Accordingly, all suitable modifications and equivalents may be resorted to falling within the scope of the invention.

## Claims

1. A system for automatically performing orbit analysis in equipment having a rotating shaft (10) to detect a malfunction by way of movement in the shaft-axis, comprising input means (20, 24) for inputting movement data indicative of the movement of the shaft (10) ;wherein the input means comprise deflection sensors (14, 16)
**characterized by**
a neural network system (22, 42, 48) for processing the movement data using a trained neural network to produce a first malfunction-indication of the equipment.

2. A system as recited in claim 1, **characterized in**
that said input means (20, 24) comprises graghic means (20) for graphically inputting an orbit plot of the axis of the shaft (10).

3. A system as recited in claim 2, **characterized in**
that said graphic means (20) comprises a mouse operatively connected to said neural network system (22, 42, 48).

4. A system as recited in claim 2, **characterized in**
that said graphic means (20) comprises a digitizing tablet operatively connected to said neural network system (22, 42, 48).

5. A system according to at least one of the claims 1 to 4, **characterized** **in**
that the equipment further includes bearings (18) for the shaft (10), and
that at least two of said deflection sensors (14, 169 are mounted on the equipment adjacent to each of the bearings.

6. A method of automatically performing orbit analysis to detect a malfunction and defect by way of a movement in the shaft axis of a rotating shaft (10) comprising the steps of:
(a) obtaining (20, 24) movement data indicative of the movement of the shaft (10) wherein same movement data indicate deflection of the axis of the shaft from a normal position; characterized by the step of
(b) processing (26, 48) the movement data using a trained neural network (22, 24, 48) to produce a first defect indication of the equipment.

7. A method as recited in claim 6, **characterized by**
the additional step of (c) generating the movement data using deflection sensors (14, 16) capable of sensing deflection of the shaft along each of two axes perpendicular to each other and substantially normal to the surface of the shat.

8. A method as recited in claim 7, **characterized in** that the shaft (10) is mounted on bearing (18), and
that at least two of said deflection sensors (14, 16) are associated with each of the bearings (18).

9. A method according to at least one of claims 6 to 8, **characterized by** the steps of:
(d) processing the deflection data using frequency analysis to obtain a second defect indication; and
(e) analyzing the first and second defect indications using an expert system rulebase to obtain a diagnosis of the equipment.

10. A method as recited in claim 12, **characterized by** the steps of:
(f) automatically supplying the deflection data for said processing in steps (b) and (d); and
(g) automatically supplying the first and second defect indications to the expert system rulebase.

11. A method according to at least one of the claims 6 to 10, **characterized** **by**
additional step of (c) training the neural network (22, 42, 48) to recognize equipment defects using training data corresponding to signals produced by sensors detecting deflection of the shaft along each of two axes perpendicular to each other and substantially normal to the surface of the shaft.

## Patentansprüche

1. System zur selbsttätigen Durchführung einer kinetischen Wellenbahnanalyse bei Geräten mit einer rotierender Welle (10) zum Erfassen einer Betriebsstörung aus der Bewegung der Wellenachse, beinhaltend Eingabemittel (20, 24) zum Eingeben von Bewegungsdaten, die für die Bewegung der Welle (10) hinweisend sind, wobei die Eingabemittel Auslenkungsfühler (14, 16) enthalten,
gekennzeichnet durch
ein Neuronnetzwerksystem (22, 42, 48) zur Verarbeitung der Bewegungsdaten unter Verwendung eines geschulten Neuronnetzwerks zwecks Erzeugens einer erste Störungsanzeige des Geräts.

2. Ein System gemäß Anspruch 1, dadurch gekennzeichnet, daß
diese Eingabemittel (20, 24) graphische Mittel (20) zur graphischen Eingabe eines graphischen Orbitplots der Achse der Welle (10) umfassen.

3. Ein System gemäß Anspruch 2, dadurch gekennzeichnet, daß diese graphischen Mittel (20) eine in Wirkverbindung mit diesem Neuronnetzwerksystem (22, 42, 48) stehende Maus umfassen.

4. Ein System gemäß Anspruch 2, dadurch gekennzeichnet, daß diese graphischen Mittel 20 ein in Wirkverbindung mit diesem Neuronnetzwerksystem (22, 42, 48) stehendes Digitalisiertablett beinhalten.

5. Ein System gemäß mindestens einem der Ansprüche 1 bis 4, dadurch gekennzeichnet, daß das Gerät ferner Lager (18) für die Welle (10) aufweist, und
daß mindestens zwei dieser Auslenkfühler (14, 169) auf dem Gerät montiert sind, und zwar jeweils in der Nähe jedes dieser Lager.

6. Verfahren zur automatischen Durchführung einer Wellenbahnanalyse zwecks Auffindens einer Störung oder eines Fehlers mittels Bewegung der Achse der Welle (10), bestehend aus folgenden Schritten:
(a) Erfassen (20, 24) von Bewegungsdaten, die die Bewegung der Welle (10) anzeigen, wobei diese Bewegungsdaten die Auslenkung der Wellenachse aus ihrer normalen Stellung beinhalten; gekennzeichnet durch den Schritt
(b) Verarbeiten (26, 48) der Bewegungsdaten unter Verwendung eines geschulten Neuronnetzwerks (22, 24, 48) zwecks Erzeugens einer ersten Fehleranzeige für das Gerät.

7. Verfahren gemäß Anspruch 6, gekennzeichnet durch den zusätzlichen Schritt des (c) Generierens der Bewegungsdaten unter Verwenden von Auslenkungsfühlern (14, 16), die in der Lage sind, die Auslenkung der Welle entlang zweier senkrecht aufeinanderstehender und im wesentlichen normal zur Wellenoberfläche stehender Achsen zu erfassen.

8. Verfahren gemäß Anspruch 7, dadurch gekennzeichnet, daß die Welle (10) in Lagern (18) läuft, und daß jedem Lager (18) jeweils wenigstens zwei dieser Auslenkungsfühler (14, 16) zugeordnet sind.

9. Verfahren gemäß wenigstens einem der Ansprüche 6 bis 8, gekennzeichnet durch die folgenden Schritte:
(d) Verarbeitung der Auslenkdaten unter Verwendung einer Frequenzanalyse zwecks Aufnahme einer zweiten Fehleranzeige; und
(e) Analyse der ersten und der zweiten Fehleranzeige unter Verwendung einer Expertensystem-Grunddatenbank zwecks Erstellens der Gerätediagnose.

10. Verfahren gemäß Anspruch 9, gekennzeichnet durch folgende Schritte:
(f) automatische Eingabe der Auslenkungsdaten zur Weiterverarbeitung in den Schritten (b) und (d); und
(g) automatische Eingabe der ersten und der zweiten Fehleranzeige in die Grunddatenbank des Expertensystems.

11. Verfahren gemäß mindestens einem der Ansprüche 6 bis 10, gekennzeichnet durch
einen zusätzlichen Schritt (c) der Schulung des Neuronnetzwerks (22, 42, 48) zwecks Erkennens von Gerätefehlern unter Verwendung von Schulungsdaten entsprechend den von den Fühlern beim Erkennen der Auslenkung der Welle entlang zweier aufeinander senkrecht stehender und im wesentlichen normal zur Wellenoberfläche verlaufender Achsen erzeugten Signalen.

## Revendications

1. Système pour effectuer automatiquement l'analyse d'orbite dans un équipement ayant un arbre rotatif (10) pour détecter une disfonction au moyen d'un mouvement dans l'axe de l'arbre comportant un moyen d'entrée (20, 24) pour entrer des données de mouvement indicatives du mouvement de l'arbre (10) ; dans lequel le moyen d'entrée comporte des capteurs de déflexion (14, 16)) **caractérisé par**
un système de réseau neuronal (22, 42, 48) pour traiter les données de mouvement, faisant appel à un réseau neuronal synchronisé pour produire une première indication de disfonction de l'équipement.

2. Système selon la revendication 1, caractérisé en ce que ledit moyen d'entrée (20, 24) comprend un moyen graphique (20) pour entrer graphiquement le tracé d'une orbite de l'axe de l'arbre (10).

3. Système selon la revendication 2, caractérisé en ce que ledit moyen graphique (20) comprend une souris à connexion opérative avec ledit système de réseau neuronal (22, 42, 48).

4. Système selon la revendication 2, caractérisé en ce que ledit moyen (20) comprend une tablette de numérisation connectée de manière opérative avec ledit système de réseau neuronal (22, 42, 48).

5. Système selon au moins une des revendications 1 à 4, caractérisé en ce que l'équipement comporte des paliers (18) pour l'arbre (10) et qu'au moins deux capteurs de déflexion (14, 16) sont montés sur l'équipement à côté de chaque palier.

6. Méthode pour effectuer automatiquement l'analyse d'orbite pour détecter une disfonction et un défaut au moyen dur mouvement dans l'axe de l'arbre d'un arbre rotatif (10) comportant les étapes suivantes :
(a) obtenir (20, 24) des données de mouvement indicatives du mouvement de l'arbre (10), dans laquelle lesdites données de mouvement indiquent la déflexion de l'axe de l'arbre d'une position normale ; caractérisée par l'étape
(b) de traitement (26, 48) des données de mouvement, faisant appel à un réseau neuronal synchronisé (22, 24, 48) pour produire une première indication de défaut de l'équipement.

7. Méthode selon la revendication 6, caractérisée par l'étape supplémentaire de (c) générant des données de mouvement utilisant des capteurs de déflexion (14, 16) capables de capter la déflexion de l'arbre le long de chacun de deux axes réciproquement perpendiculaires et substantiellement normaux par rapport à la surface de l'arbre.

8. Méthode selon la revendication 7, caractérisée en ce que l'arbre (10) est monté sur un palier (18) et qu'au moins deux desdits capteurs de déflexion (14, 16) sont associés à chacun des paliers (18).

9. Méthode selon au moins une des revendications 6 à 8, caractérisée par les étapes suivantes :
(d) traiter les données de déflexion utilisant l'analyse de fréquence pour obtenir une seconde indication de défaut ; et
(e) analyser les première et seconde indications de défaut utilisant la base de règles d'un système expert pour obtenir un diagnostic de l'équipement.

10. Méthode selon la revendication 9, caractérisée par les étapes suivantes :
(f) fournir automatiquement les données de déflexion pour ledit traitement dans les étapes (b) et (d) ; et
(g) fournir automatiquement les première et seconde indications de défaut à la base de règles du système expert.

11. Méthode selon au moins une des revendications 6 à 10, caractérisée par l'étape supplémentaire de (c) synchronisant le réseau neuronal (22, 42, 48) pour reconnaître les défauts d'équipement, faisant appel à des données de synchronisation correspondant aux signaux produits par les capteurs détectant la déflexion de l'arbre le long de chacun de deux axes réciproquement perpendiculaires et substantiellement normaux par rapport à la surface de l'arbre.
